# FASCICULE DE BREVET EUROPEEN

(11) **EP 1 110 998 B1**
(45) Date de publication et mention de la délivrance du brevet: **15.12.2004**
(21) Numéro de dépôt: 00127057.8
(22) Date de dépôt: 11.12.2000
(51) Int. Cl.: C08K 3/36, C08L 19/00, B60C 1/00, C08G 77/442

(54) **Composition de caoutchouc vulcanisable pour la fabrication d'un pneumatique et pneumatique dont la bande de roulement comprend une telle composition**
Zusammensetznug aus vulkanisierbarem Kautschuk zur Herstellung von Reifen und Reifen dessen Laufstreifen eine solche Zusammensetzung enthalten
Composition of curable rubber for the production of tyres and the tyres which tyre tread comprizes such composition

(30) Priorité: 20.12.1999 FR 9916104
(43) Date de publication de la demande: 27.06.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Robert, Pierre, 63170 Perignat-Les-Sarlieve (FR); Cabioch, Jean-Luc, 63119 Chateaugay (FR); Favrot, Jean-Michel, 63800 Cournon-d'Auvergne (FR)
(74) Mandataire: Hiebel, Robert

(56) Documents cités:
- EP-A- 0 877 047
- FR-A- 2 740 778

## Description

La présente invention concerne une composition de caoutchouc vulcanisable qui est utilisable pour la fabrication d'enveloppes de pneumatiques, un procédé de préparation de cette composition et une enveloppe de pneumatique dont la bande de roulement comprend une telle composition, cette dernière présentant des propriétés hystérétiques et physiques améliorées à l'état vulcanisé, tout en conservant des propriétés de mise en oeuvre satisfaisantes à l'état non vulcanisé.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre zen oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

Pour atteindre un tel objectif, de nombreuses solutions ont été proposées consistant notamment à modifier la structure des polymères et des copolymères diéniques en fin de polymérisation au moyen d'agents de fonctionnalisation, de couplage ou d'étoilage. La très grande majorité de ces solutions s'est concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à des charges renforçantes constituées de noir de carbone, on peut par exemple citer le document de brevet américain US-A- 3 135 716, qui décrit la réaction de polymères diéniques vivants en fin de chaîne avec un agent de couplage organique polyfonctionnel pour obtenir des polymères aux propriétés améliorées. On peut également citer le document de brevet américain US-A-3 244 664, qui divulgue l'utilisation de tétra alcoxysilanes, à titre d'agent de couplage ou d'étoilage de polymères diéniques.

L'utilisation de silice à titre de charge renforçante dans des compositions de caoutchouc vulcanisables, notamment destinées à entrer dans la constitution de bandes de roulement de pneumatique, est ancien. Cependant, cette utilisation est restée très limitée, en raison du niveau insatisfaisant de certaines propriétés physiques de telles compositions, notamment la résistance à l'abrasion.

C'est la raison pour laquelle il a été proposé d'utiliser, pour pallier ces inconvénients, des polymères diéniques fonctionnalisés à la place des polymères non fonctionnalisés qui étaient antérieurement utilisés, et en particulier des polymères fonctionnalisés par des dérivés alcoxysilanes, tels que des tétra éthoxysilanes. On peut par exemple citer le document de brevet américain US-A-5 066 721, qui décrit une composition de caoutchouc comprenant un polymère diénique fonctionnalisé par un alcoxysilane ayant au moins un reste alcoxyle non hydrolysable, ce qui permet l'élimination du solvant de polymérisation par un stripping à la vapeur d'eau.

Un inconvénient de ces réactions de fonctionnalisation réside dans les réactions de couplage qui les accompagnent, ce qui impose généralement d'utiliser un excès d'alcoxysilane et/ou un mélangeage intense, pour minimiser ces réactions de couplage.

Un autre inconvénient de ces réactions réside dans la mise en oeuvre ultérieure de l'opération de stripping à la vapeur d'eau, qui est nécessaire pour éliminer le solvant de polymérisation.

En effet, d'une manière générale, l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alcoxysilane appartenant à une famille restreinte, telle que celle qui est décrite dans le document précité US-A-5 066 721.

Par conséquent, il ressort de ce qui précède que l'utilisation de polymères diéniques comprenant une fonction alcoxysilane pour obtenir des compositions de caoutchouc comprenant de la silice à titre de charge renforçante n'est pas satisfaisante, en dépit des propriétés physiques améliorées de ces compositions.

C'est la raison pour laquelle des recherches ont été menées sur d'autres réactions de fonctionnalisation, toujours en vue de l'obtention de telles compositions de caoutchouc.

A titre d'exemple, on peut citer le document de brevet français FR-A-2 740 778 au nom de la demanderesse, qui divulgue l'utilisation de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

Ces polymères fonctionnalisés sont destinés à être incorporés à des compositions vulcanisées comprenant à titre de charge renforçante de la silice à titre majoritaire, par exemple comprenant un coupage de silice et de noir de carbone. On a pu établir que ces polymères confèrent des propriétés de caoutchouterie, notamment hystérétiques et de renforcement à l'état vulcanisé, qui sont améliorées par rapport à celles de compositions témoin à base de polymères diéniques non fonctionnalisés, et qui sont au moins analogues à celles de compositions à base de polymères diéniques comprenant une fonction alcoxysilane.

Cependant, il se trouve que cette amélioration à l'état vulcanisé des propriétés d'hystérèse et de renforcement s'accompagne, à l'état non vulcanisé, d'une augmentation de la viscosité Mooney des compositions testées par rapport auxdites compositions témoin, c'est-à-dire d'une aptitude à la mise en oeuvre réduite.

Le but de la présente invention est de remédier à cet état de fait, et il est atteint en ce que la demanderesse vient de découvrir de façon surprenante qu'une composition de caoutchouc comprenant une charge blanche renforçante et au moins un copolymère diénique à blocs qui est destiné à interagir avec ladite charge blanche renforçante et qui comprend à l'une au moins de ses extrémités de chaîne un bloc polysiloxane terminé par un groupe trialkylsilyl, ledit bloc répondant à la formule:

[-(SiR₁R₂O)-]ₓ-SiR₃R₄R₅,

où R₁, R₂, R₃, R₄ et R₅ représentent des groupes alkyle ayant de 1 à 20 atomes de carbone et où x est un nombre entier naturel non nul,
conduit à des propriétés hystérétiques aux petites et aux grandes déformations qui sont comparables à celles atteintes avec les polymères diéniques fonctionnalisés précédemment cités, tout en conduisant à des propriétés de mise en oeuvre à l'état non vulcanisé qui sont particulièrement avantageuses, car proches de celles obtenues avec une composition à base d'un polymère diénique non fonctionnalisé.

De préférence, la masse moléculaire dudit ou de chaque bloc polysiloxane est comprise entre 500 et 5000 g/mol.

Ledit copolymère diénique à blocs est obtenu par réaction d'un premier réactif constitué d'un polymère diénique avec un second réactif constitué d'un polysiloxane fonctionnalisé. On notera que cette réaction peut être mise en oeuvre en continu ou en discontinu.

Ce copolymère à blocs peut être obtenu de deux manières différentes:
- la première manière consiste en la réaction d'un polymère diénique vivant avec un bloc polysiloxane ayant une fonction Si-Cl en extrémité de chaîne. Plus précisément, on greffe sur ce polymère vivant un autre polymère, qui comprend ledit polysiloxane et qui est obtenu par voie anionique au moyen d'un initiateur comprenant un groupe alkyle à titre de carbanion.
- la seconde manière consiste en une polymérisation séquencée. On polymérise d'abord un ou plusieurs monomères pour obtenir un premier bloc constitué d'un polymère diénique vivant, puis on fait réagir ce premier bloc dans un solvant polaire avec un siloxane cyclique qui se polymérise anioniquement en formant au moins un second bloc. A la fin de la polymérisation, on fonctionnalise le copolymère ainsi obtenu par un trialkylchlorosilane.

On pourra se reporter au document de brevet français FR-A-2 740 778 pour une description de cette polymérisation séquencée, le premier et le second blocs étant par exemple respectivement obtenus par copolymérisation du butadiène et du styrène, et par polymérisation de l'hexaméthylcyclotrisiloxane.

On notera que la première manière précitée pour l'obtention dudit copolymère à blocs permet avantageusement l'introduction d'un solvant polaire en quantité réduite dans le milieu réactionnel.
∗ A titre de premier réactif, on entend par polymère diénique tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués conviennent notamment, le 1, 3-butadiène, le 2-méthyl 1, 3-butadiène, les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène.

A titre de composés vinylaromatiques conviennent notamment le styrène, l'ortho-, para-, ou meta-méthylstyrène, le mélange commercial "vinyl toluène", le paratertiobutylstyrène, les méthoxystyrènes, le vinylmésitylène, le divinylbenzène, le vinyinaphtalène.

A titre préférentiel pour ce polymère diénique, conviennent:
- les polybutadiènes, en particulier ceux ayant une teneur massique en unités 1, 2 allant de 4 % à 80 %,
- les polyisoprènes dont le taux en unités vinyliques est inférieur à 80 %,
- les copolymères de butadiène-styrène, en particulier ceux ayant, d'une part, une teneur massique en styrène allant de 4 % à 50 % et plus particulièrement de 20 % à 40 % et, d'autre part, des teneurs massiques en liaisons 1, 2 et trans 1, 4 allant respectivement de 4 % à 65 % et de 30 % à 80 %,
- les copolymères de butadiène-isoprène, notamment ceux ayant une teneur massique en isoprène allant de 5 % à 90 % et une température de transition vitreuse (Tg) pouvant aller de -80° C à -20° C,
- les copolymères isoprène-styrène, notamment ceux ayant une teneur massique en styrène allant de 5 % à 50 % et un taux en unités vinyliques qui est inférieur à 90 %,
- les terpolymères de butadiène-styrène-isoprène, notamment ceux ayant une teneur massique en styrène allant de 5 % à 50 % et plus particulièrement allant de 10 % à 40 %, une teneur massique en isoprène allant de 15 % à 60 % et plus particulièrement allant de 20 % à 50 %, une teneur massique en butadiène allant de 5 % à 50 % et plus particulièrement allant de 20 % et 40 %, une teneur massique en unités 1, 2 de la partie butadiénique allant de 4 % à 85 %, une teneur massique en unités trans 1, 4 de la partie butadiénique allant de 6 % à 80 %, une teneur massique en unités 1, 2 et 3, 4 de la partie isoprénique allant de 5 % à 70 %, et une teneur massique en unités trans 1, 4 de la partie isoprénique allant de 10 % à 50 %.

De préférence, ce polymère diénique constituant le premier réactif est obtenu par voie anionique, au moyen d'un initiateur monofonctionnel ou difonctionnel, suivant que l'on souhaite obtenir, pour ledit copolymère à blocs, un bloc polysiloxane terminé par un groupe trialkylsilyl à une seule ou à chacune des deux extrémités de chaîne, respectivement. Cet initiateur est par exemple constitué d'un alkyl lithium, de préférence le n-butyl lithium, ou d'un amidure de lithium.
* A titre de second réactif, ledit polysiloxane fonctionnalisé est porteur d'une fonction halogéno-organosilane en extrémité de chaîne et d'une fonction trialkylsilyl à l'autre extrémité.

Il est obtenu, dans un premier temps, par la polymérisation d'un siloxane cyclique qui est initiée par un composé organométallique ayant une liaison carbone-métal, de préférence un composé organolithien puis, dans un second temps, par la fonctionnalisation au moyen d'un dihalogéno-organosilane du polysiloxane ainsi obtenu.

De préférence pour l'obtention de ce second réactif, on utilise l'hexaméthylcyclotrisiloxane à titre de siloxane cyclique, le n-butyl lithium à titre d'initiateur et le dichlorodiméthylsilane à titre d'agent de fonctionnalisation du polysiloxane.

Le ou chaque bloc polysiloxane est alors constitué de polydiméthylsiloxane (en abrégé PDMS dans la suite de la présente description) se terminant par un groupe trialkylsilyl.

Selon des variantes de préparation de ce second réactif, on peut utiliser à titre d'initiateur le sec-butyl lithium, le n-propyl lithium ou l'éthyl lithium, pour l'obtention d'un polysiloxane dont le groupe terminal trialkylsilyl comprend un radical sec-butyl, n-propyl ou éthyl, respectivement.

Une composition de caoutchouc selon l'invention est obtenue par mélangeage au moyen d'un travail thermo-mécanique dudit copolymère à blocs comprenant au moins un bloc polysiloxane terminé par un groupe trialkylsilyl, d'une part, avec une charge blanche renforçante présente à titre majoritaire dans la charge renforçante utilisée et, d'autre part, avec des additifs appropriés pour l'obtention d'une composition de caoutchouc vulcanisable.

Selon des variantes de réalisation pour l'obtention de cette composition selon l'invention, on utilise ledit copolymère à blocs en coupage avec un ou plusieurs autres élastomères conventionnellement utilisés dans les enveloppes de pneumatiques, tels que du caoutchouc naturel ou un coupage à base de caoutchouc naturel et d'un élastomère synthétique, ou encore d'un autre élastomère diénique éventuellement couplé et/ou étoilé, ou encore partiellement ou entièrement fonctionnalisé par un bloc autre qu'un bloc polysiloxane terminé par un groupe trialkylsilyl.

On notera que l'amélioration des propriétés de la composition de caoutchouc selon l'invention sera d'autant plus élevée, que la proportion dudit ou desdits élastomères conventionnels dans la composition selon l'invention sera plus réduite. Avantageusement, cet ou ces élastomères conventionnels pourront le cas échéant être présents dans la composition selon l'invention selon une quantité allant de 1 à 70 parties en poids pour 100 parties en poids de copolymère élastomère comprenant au moins un bloc polysiloxane terminé par un groupe trialkylsilyl.

Dans la présente demande, on entend par "charge blanche renforçante" une charge "blanche" (i.e., inorganique, en particulier minérale), parfois aussi appelée charge "claire", capable de renforcer à elle seule, sans autre moyen qu'un système de couplage intermédiaire, une composition de caoutchouc destinée à la fabrication de pneumatiques, en d'autres termes capable de remplacer dans sa fonction de renforcement une charge conventionnelle de noir de carbone de grade pneumatique.

Préférentiellement, la charge blanche renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.

Selon un exemple préférentiel de réalisation de l'invention, ladite composition de caoutchouc comprend majoritairement ladite charge blanche renforçante à titre de charge renforçante (c'est-à-dire avec une fraction massique de charge blanche renforçante dans la totalité de la charge renforçante qui est supérieure à 50 %).

On notera que la charge renforçante peut contenir en coupage (mélange), en plus de la ou des charges blanches renforçantes précitées, du noir de carbone à titre minoritaire (c'est-à-dire selon une fraction massique inférieure à 50 %). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375.

Par exemple, les coupages noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Dans le cas où la charge renforçante ne contient qu'une charge blanche renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élévée en charge blanche renforçante, et que lesdites propriétés sont optimales lorsque ladite composition contient uniquement une charge blanche renforçante, par exemple de la silice, à titre de charge renforçante. Ce dernier cas constitue donc un exemple préférentiel de composition de caoutchouc selon l'invention.

La composition de caoutchouc selon l'invention comprend en outre de manière classique, un agent de liaison charge blanche renforçante / matrice élastomère (encore appelé agent de couplage), qui a pour fonction d'assurer une liaison (ou couplage) suffisante, de nature chimique et/ou physique, entre ladite charge blanche et la matrice, tout en facilitant la dispersion de cette charge blanche au sein de ladite matrice.

Un tel agent de liaison, au moins bifonctionnel, a par exemple comme formule générale simplifiée « Y-T-X », dans laquelle:
- Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (« fonction X ») qui est capable de se lier physiquement et/ou chimiquement à l'élastomère, par exemple par l'intermédiaire d'un atome de soufre;
- T représente un groupe hydrocarboné permettant de relier Y et X.

Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.

De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes, ou des polyorganosiloxanes porteurs des fonctions X et Y précitées.

On utilise en particulier des alkoxysilanes polysulfurés, tels que décrits par exemple dans les documents de brevet US-A-3 842 111, US-A-3 873 489, US-A-3 978 103, US-A-3 997 581, US-A-4 002 594 ou, plus récemment, US-A-5 580 919, US-A-5 583 245, US-A-5 663 396, US-A-5 684 171, US-A-5 684 172, US-A-5 696 197, qui décrivent en détail de tels composés connus.

Conviennent en particulier pour la composition de l'invention, sans que la définition ci-après soit limitative, des alkoxysilanes polysulfurés dits « symétriques » répondant à la formule générale (I) suivante:

(l) Z - A - Sₙ - A - Z,

dans laquelle:
- n est un entier de 2 à 8;
- A est un radical hydrocarboné divalent;
- Z répond à l'une des formules ci-après: 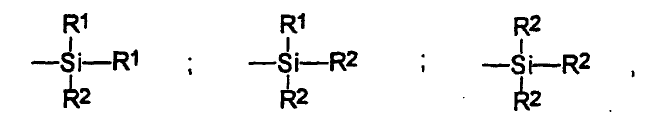
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈;
- les radicaux R², substitués ou non substitués, identiques ou différents entre eux, représentent un groupe alkoxyle en C₁-C₁₈ ou cycloalkoxyle en C₅-C₁₈.

Dans la formule (I) ci-dessus, le nombre n est de préférence un nombre entier de 3 à 5.

Dans le cas d'un mélange d'alkoxysilanes polysulfurés répondant à la formule (I) ci-dessus, notamment des mélanges usuels disponibles commercialement, la valeur moyenne des "n" est un nombre fractionnaire, de préférence compris entre 3 et 5, plus préférentiellement proche de 4.

Le radical A, substitué ou non substitué, est de préférence un radical hydrocarboné divalent, saturé ou non saturé, comportant de 1 à 18 atomes de carbone. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

Les radicaux R¹ sont préférentiellement des groupes alkyle en C₁-C₆, cyclohexyle ou phényle, notamment des groupes alkyle en C₁-C₄, plus particulièrement le méthyle et/ou l'éthyle.

Les radicaux R² sont préférentiellement des groupes alkoxyle en C₁-C₈ ou cycloalkoxyle en C₅-C₈, plus particulièrement le méthoxyle et/ou l'éthoxyle.

De tels alkoxysilanes polysulfurés dits "symétriques", ainsi que certains de leurs procédés d'obtention sont par exemple décrits dans les brevets récents US-A- 5 684 171 et US-A- 5 684 172 donnant une liste détaillée de ces composés connus, pour n variant de 2 à 8.

Préférentiellement, l'alkoxysilane polysulfuré mis en oeuvre dans l'invention est un polysulfure, en particulier un tétrasulfure, de bis(alkoxyl(C₁-C₄)silylpropyle), plus préférentiellement de bis(trialkoxyl(C₁-C₄)silylpropyle), notamment de bis(3-triéthoxysilylpropyle) ou de bis(3-triméthoxysilylpropyle).

A titre d'exemple particulièrement préférentiel, on utilise le tétrasulfure de bis(triéthoxysilylpropyle) ou TESPT, de formule [(C₂H₅O)₃Si(CH₂)₃S₂]₂, commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

L'homme du métier saura ajuster la teneur en agent de couplage dans les compositions de l'invention en fonction de l'application visée, de la matrice élastomère utilisée et de la quantité de charge blanche renforçante utilisée.

Dans les compositions de caoutchoucs conformes à l'invention, la teneur en agent de couplage peut être comprise dans un domaine de 0,5 à 15 % par rapport à la masse de charge blanche renforçante et, préférentiellement, dans un domaine allant de 5 à 10 %.

Bien entendu, l'agent de couplage pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. Il pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état non vulcanisé, utiliser l'agent de couplage, soit greffé sur la charge blanche renforçante, soit à l'état libre (i.e., non greffé).

Quant aux additifs précités qui sont utilisés dans cette composition, ils peuvent comprendre notamment des plastifiants, des pigments, des anti-oxydants, des cires anti-ozonantes, un système de vulcanisation à base soit de soufre et/ou de peroxyde et/ou de bismaléimides, des accélérateurs de vulcanisation, des huiles d'extension, un ou plusieurs agents de recouvrement de la silice tels que des alcoxysilanes, des polyols, ou des amines.

L'invention a également pour objet une bande de roulement d'enveloppe de pneumatique, qui est telle qu'elle comprend une composition de caoutchouc telle que celle susmentionnée.

En raison de l'hystérèse réduite qui caractérise une composition de caoutchouc selon l'invention à l'état vulcanisé, on notera qu'une enveloppe de pneumatique dont la bande de roulement comprend ladite composition présente une résistance au roulement avantageusement réduite.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans les exemples qui suivent, les viscosités sont des viscosités inhérentes qui sont mesurées dans le toluène, à une concentration de 1 g/l.

### I/ EXEMPLES DE PREPARATION DE POLYMERES SELON L'INVENTION:

### EXEMPLE I.1: préparation d'un copolymère à deux blocs SBR et PDMS terminé par un groupe trialkylsilyl, le bloc PDMS présentant une masse moléculaire de 1200 g/mol et ce copolymère répondant à la formule

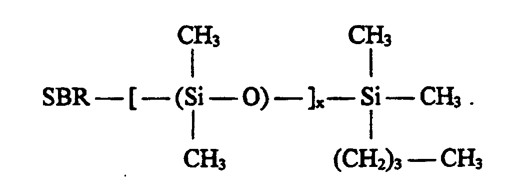

### - Synthèse d'un PDMS fonctionnalisé comprenant une fonction [Si(CH₃)₂Cl]:

Dans une bouteille munie d'un joint étanche et d'une capsule à trois trous, on injecte 20 ml de toluène et 0,045 mol d'hexaméthylcyclotrisiloxane, on ajoute 0,008 mole de butyl lithium (solution à 0,4 mol/l dans le cyclohexane). La solution est agitée pendant une heure à 70° C. On ajoute ensuite 50 ml de THF préalablement distillé sur sodium/benzophénone. Après 75 minutes d'agitation à 60° C, on ajoute 0,0088 mol de dichlorodiméthylsilane. Le polymère ainsi obtenu peut être stocké pendant plusieurs jours sous atmosphère d'azote, et sa masse moléculaire, déterminée par la technique SEC, est de 1200 g/mol.

### - Préparation du copolymère à deux blocs:

Dans un réacteur de 10 l contenant 5,8 l de toluène désaéré, on injecte 231 g de styrène, 410 g de butadiène, et 1150 ppm de THF. Après neutralisation des impuretés à l'aide de n-butyl lithium, on ajoute 0,0032 mole de n-butyl lithium actif La polymérisation est conduite à 40° C.

Lorsque la conversion atteint 75 % (viscosité de 1,40 dl/g), on injecte dans le réacteur la solution de PDMS-[Si(Me)₂Cl] préparée comme ci-dessus. On agite la solution pendant 15 min à 40° C. On stoppe la polymérisation et on traite au moyen d'un antioxydant le copolymère obtenu, respectivement par addition de 0,8 partie pour cent parties (pce) de 2,2'-méthylène bis (4-méthyl-6-tertiobutylphénol) et de 0,2 pce de N-(1,3-diméthyIbutyl)-N'-phényl-p-phénylène diamine.

On récupère le copolymère par opération classique de stripping à la vapeur d'eau du solvant, puis on le sèche sur outil à 100° C pendant 10 min.

La viscosité inhérente du copolymère (dans le toluène) après stripping et séchage est de 1,53 dl/g et la viscosité Mooney ML (1+4, 100° C) est de 36.

Une analyse du copolymère par proche infra-rouge montre que le SBR contient 27 % en poids de styrène. La fraction butadiénique contient quant à elle 40 % d'enchaînements vinyliques.

Le pourcentage de chaînes couplées (en poids), déterminé par la technique de chromatographie par exclusion de taille (technique SEC), est de 10 %.

La masse du copolymère, déterminée par osmométrie, est de 170 000 g/mol.

Une analyse par RMN ¹H du copolymère à deux blocs obtenu est effectuée sur un échantillon ayant subi trois séries de traitements, constituées chacune d'une coagulation dans un coupage THF - méthanol (50 %-50 %) suivie d'une remise en solution dans le toluène. On a utilisé pour cette analyse RMN ¹H un appareil commercialisé sous la dénomination « BRUKER AC200 ».

Le spectre RMN ¹H de ce copolymère est caractérisé par un massif entre -0,1 et 0,1 ppm. En déterminant pour ce copolymère le taux de motifs -[Si(CH₃)₂O]- qui correspondent à ce massif, et en prenant en compte la masse moléculaire en nombre (Mn) du bloc PDMS (1200 g/mol) qui est évaluée par la technique précitée SEC, et il en résulte que le taux de copolymère comportant un bloc PDMS est de 70 %.

### EXEMPLE I.2: préparation d'un copolymère à deux blocs SBR et PDMS terminé par un groupe trialkylsilyl, le bloc PDMS présentant une masse moléculaire de 4500 g/mol et ce copolymère répondant à la formule

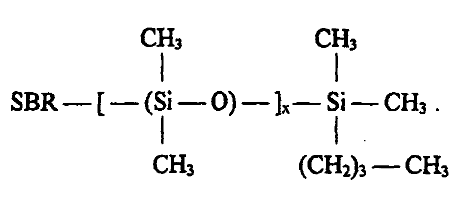

- Le bloc PDMS est préparé dans les mêmes conditions que celui décrit précédemment, à l'exception toutefois de la quantité de n-butyl lithium utilisée qui est ici de 0,002 mol.
- Le copolymère à deux blocs SBR-PDMS est préparé dans des conditions identiques à celles décrites ci-dessus.

La viscosité inhérente du copolymère (dans le toluène), après stripping et séchage, est de 1,59 dl/g.

La masse moléculaire moyenne en nombre du copolymère, déterminée par osmométrie, est de 175 000 g/mol.

En mettant en oeuvre la méthode d'analyse RMN ¹H et l'appareillage correspondant qui ont été décrits à l'exemple I. 1 ci-dessus, on a déterminé un taux de copolymère comportant un bloc PDMS qui est de 70 % environ.

### II/ EXEMPLES DE COMPOSITIONS DE CAOUTCHOUC SELON L'INVENTION:

Dans les exemples qui suivent, les propriétés des compositions de l'invention sont évaluées comme suit:
- viscosité Mooney ML (1+4) à 100°C: mesurée selon la norme ASTM: D-1646, intitulée « Mooney » dans les tableaux,
- modules d'allongement à 300 % (MA 300), à 100 % (MA 100) et à 10 % (MA 10): mesures effectuées selon la norme ISO 37,
- pertes hystérétiques (PH): mesurées par rebond à 60° C en %. La déformation pour les pertes mesurées est de 35 %,
- dureté SHORE A: mesures effectuées selon la norme DIN 53505,
- Propriétés dynamiques en cisaillement: mesures en fonction de la déformation, effectuées à 10 Hertz avec une déformation crête-crête allant de 0,15 % à 50 %. La non-linéarité exprimée est la différence de module de cisaillement entre 0,15 % et 50 % de déformation en MPa. L'hystérèse est exprimée par la mesure de tan delta à 7 % de déformation et à 23° C selon la norme ASTM D2231-71 (réapprouvée en 1977).

### EXEMPLE II.1

Dans cet exemple, on a étudié les contributions de quatre élastomères « SBR A, SBR B, SBR C et SBR D » respectivement à l'intérieur de compositions de caoutchouc A, B, C, et D, de type bande de roulement pour pneumatique tourisme et avec uniquement de la silice à titre de charge renforçante. Ces quatre élastomères présentent les caractéristiques suivantes:
- SBR A est un SBR témoin qui a été synthétisé conformément à l'exemple I. 1 selon l'invention, à l'exception du stoppage de la réaction de polymérisation qui a été réalisé à l'aide de méthanol;
- SBR B est un SBR qui présente une fonction diméthylsilanol, laquelle est obtenue par addition d'hexaméthylcyclotrisiloxane lorsque le taux de conversion des monomères atteint 70 % (on pourra se reporter au document de brevet français FR-A-2 740 778 pour une description de cette fonctionnalisation);
- SBR C est un SBR selon l'invention dont la synthèse a été décrite à l'exemple I. 1, et
- SBR D est un SBR qui a été obtenu par polymérisation anionique de l'hexaméthylcyclotrisiloxane, subséquente à une copolymérisation du styrène et du butadiène (voir le document de brevet précité FR-A-2 740 778, en page 15). Ce SBR D comporte un bloc PDMS terminé par une fonction diméthylsilanol, ce bloc présentant une masse molaire égale à 4500 g/mol.

La formulation utilisée pour chacune de ces quatre compositions A, B, C et D est la suivante (toutes les parties sont exprimées en poids):

| | |
|---|---|
| Elastomère | 100 |
| Silice (1) | 80 |
| Huile aromatique (2) | 40 |
| Agent de liaison (3) | 6,4 |
| ZnO | 2,5 |
| Acide stéarique | 1,5 |
| Anti-oxydant (4) | 1,9 |
| Cire anti-ozonante (5) | 1,5 |
| Soufre | 1,1 |
| Sulfénamide (6) | 2 |
| Diphénylguanidine | 1,5 |
| avec | |

| | |
|---|---|
| (1) = silice ZEOSIL 1165 de Rhône-Poulenc, | |
| (2) = huile commercialisée sous la dénomination Enerflex 65, | |
| (3) = agent de liaison Si69 Dégussa, | |
| (4) = N-(1, 3-diméthyl butyl)n-N'-phényl-p-phénylènediamine | |
| (5) cire C32ST | |
| (6) N-cyclohexyl-2-benzothiazylsulfénamide | |

Chaque composition A, B, C, D est réalisée selon la méthode décrite dans le document de brevet européen EP-A-501 227, étant précisé que l'on opère un travail thermo-mécanique en deux étapes qui durent respectivement 5 min et 4 min, pour une vitesse moyenne des palettes de 45 t/min, jusqu'à atteindre une température maximale de tombée identique de 160° C, tandis que l'étape d'incorporation du système vulcanisant est effectuée sur « l'homo-finisseur» à 30° C.

La vulcanisation est effectuée à 150° C pendant 40 min.

Les résultats sont consignés dans le tableau 1.

**Tableau 1:**

| COMPOSITION | A | B | C | D |
|---|---|---|---|---|
| Propriétés de l'élastomère SBR | | | | |
| ML (1+4) à 100°C | 30 | 32 | 36 | 38 |

| Propriétés à l'état non vulcanisé | | | | |
|---|---|---|---|---|
| ML (1+4) à 100° C | 50 | 84 | 62 | 67 |

| Propriétés à l'état vulcanisé | | | | |
|---|---|---|---|---|
| Shore | 62,8 | 58,7 | 59,2 | 59,5 |
| MA 10 | 4,68 | 3,63 | 3,95 | 3,68 |
| MA 100 | 1,77 | 1,75 | 1,59 | 1,94 |
| MA 300 | 2,15 | 2,47 | 2,14 | 2,71 |
| MA 300 / MA 100 | 1,21 | 1,41 | 1,35 | 1,40 |
| Pertes PH (60° C, déf 35 %) | 30,6 | 19,2 | 26,4 | 20,3 |

| Propriétés dynamiques en fonction de la déformation | | | | |
|---|---|---|---|---|
| Delta G*23°C | 2,51 | 0,97 | 1,53 | 1,05 |
| tanₘₐₓ 23°C | 0,302 0,210 0,255 | 0,211 | | |

On en déduit qu'en mélange silice et concernant les propriétés à l'état vulcanisé, le SBR C selon l'invention confère à la composition C des propriétés de renforcement qui sont supérieures à celles obtenues avec le SBR témoin A. D en est de même pour le SBR B et le SBR D, vis-à-vis dudit SBR A.

De plus, on notera que les propriétés hystérétiques à faibles et fortes déformations de la composition C selon l'invention sont, d'une part, nettement améliorées par rapport à celles de la composition témoin A et, d'autre part, sont voisines de celles des compositions B et D.

Concernant l'état non vulcanisé, on notera que la composition C de l'invention présente une viscosité Mooney qui est inférieure à celles des compositions B et D, et qui est proche de celle de la composition témoin A.

Par conséquent, la composition C de l'invention présente une aptitude à la mise en oeuvre qui est améliorée par rapport à celles des compositions B et D à élastomères fonctionnalisés classiques, et qui est sensiblement du même ordre que celle de la composition A à élastomère non fonctionnalisé.

En d'autres termes, il apparaît que l'incorporation à une composition de caoutchouc d'un élastomère selon l'exemple I. 1 de l'invention, tel que le SBR C, permet d'obtenir pour cette composition des propriétés de caoutchouterie nettement améliorées par rapport à celles d'une composition à élastomère non fonctionnalisé, tel que le SBR A, tout en présentant vis-à-vis de cette dernière composition une facilité de mise en oeuvre analogue.

### EXEMPLE II.2:

Dans cet exemple, on a étudié les contributions de trois des quatre élastomères précités SBR A, SBR B, SBR C et d'un second élastomère selon l'invention SBR E, respectivement à l'intérieur de compositions de caoutchouc A, B, C et E, toujours de type bande de roulement pour pneumatique tourisme et avec uniquement de la silice à titre de charge renforçante.

Le second élastomère SBR E selon l'invention a été synthétisé de la manière décrite dans l'exemple I. 2.

Pour chaque composition A, B, C, E, la formulation, le mélangeage et la vulcanisation sont les mêmes que dans l'exemple II. 1.

Les résultats sont consignés dans le tableau 2 ci-dessous.

**Tableau 2:**

| COMPOSITION | A | B | C | E |
|---|---|---|---|---|
| Propriétés de l'élastomère SBR | | | | |
| ML (1+4) à 100° C | 30 | 32 | 36 | 29 |

| Propriétés à l'état non vulcanisé | | | | |
|---|---|---|---|---|
| ML (1+4) à 100° C | 50 | 84 | 62 | 61 |

| Propriétés à l'état vulcanisé | | | | |
|---|---|---|---|---|
| Shore | 62,8 | 58,7 | 59,2 | 60,7 |
| MA 10 | 4,68 | 3,63 | 3,95 | 4,21 |
| MA 100 | 1,77 | 1,75 | 1,59 | 1,62 |
| MA 300 | 2,15 | 2,47 | 2,14 | 2,05 |
| MA 300 / MA 100 | 1,21 | 1,41 | 1,35 | 1,27 |
| Pertes PH (60° C, déf 35 %) | 30,6 | 19,2 | 26,4 | 30,4 |

| Propriétés dynamiques en fonction de la déformation | | | | |
|---|---|---|---|---|
| Delta G*23°C | 2,51 | 0,97 | 1,53 | 1,80 |
| tan ₘₐₓ23° C | 0,302 | 0,210 | 0,255 | 0,259 |

On en déduit qu'en mélange silice, concernant les propriétés à l'état vulcanisé, le SBR C selon l'invention confère à la composition correspondante C des propriétés de renforcement qui sont supérieures à celles obtenues avec le SBR témoin A et avec l'autre SBR E selon l'invention. Il en est de même pour la composition B comprenant le SBR B, vis-à-vis de la composition A à base de ce SBR témoin A.

De plus, on notera, d'une part, que les propriétés hystérétiques à faibles et fortes déformations de la composition C selon l'invention sont améliorées par rapport à celles de la composition témoin A et de l'autre composition E selon l'invention et que, d'autre part, lesdites propriétés hystérétiques sont améliorées pour la composition E selon l'invention par rapport à la composition témoin A.

Concernant l'état non vulcanisé, on notera que les compositions C et E de l'invention présentent des viscosités Mooney qui sont inférieures à celle de la composition B à élastomère fonctionnalisé classique, et qui sont proches de celle de la composition témoin A.

Par conséquent, les composition C et E de l'invention présentent une aptitude à la mise en oeuvre qui est améliorée par rapport à celle de la composition B à élastomère fonctionnalisé classique, et qui est sensiblement du même ordre que celle de la composition A à élastomère non fonctionnalisé.

En d'autres termes, il apparaît que l'incorporation à une composition de caoutchouc C d'un élastomère SBR C selon l'exemple I. 1 de l'invention permet d'obtenir pour cette composition C des propriétés de caoutchouterie nettement améliorées par rapport à celles, d'une part, de la composition A à élastomère non fonctionnalisé et, d'autre part, de l'autre composition E selon l'exemple I. 2 de l'invention, tout en présentant vis-à-vis de ladite composition A une facilité de mise en oeuvre analogue.

### EXEMPLE II.3:

Dans cet exemple, on a étudié les contributions de trois des quatre élastomères précités SBR A, SBR B, SBR C et d'un troisième élastomère selon l'invention SBR F, respectivement à l'intérieur de compositions de caoutchouc A, B, C et F, toujours de type bande de roulement pour pneumatique tourisme et avec uniquement de la silice à titre de charge renforçante.

Le troisième élastomère SBR F selon l'invention comprend un coupage de l'élastomère SBR A et d'un polymère PDMS de masse moléculaire égale à 4200 g/mol, le bloc PDMS étant préparé conformément à l'exemple I. 1, à la différence que l'on ajoute du méthanol à la place du dichlorodiméthylsilane en fin de polymérisation. Ce bloc PDMS répond à la formule suivante:

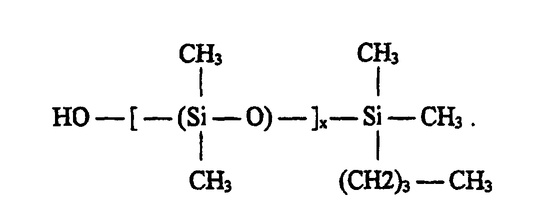

Pour chaque composition A, B, C, la formulation, le mélangeage et la vulcanisation sont les mêmes que pour l'exemple II. 1. Pour la composition F, les 100 parties d'élastomère se subdivisent en 97 parties d'élastomère A et en 3 parties du PDMS décrit ci-dessus, qui sont introduites en même temps dans le mélangeur interne.

Les résultats sont consignés dans le tableau 3 ci-dessous.

**Tableau 3:**

| COMPOSITION | A | B | C | F |
|---|---|---|---|---|
| Propriétés de l'élastomère SBR | | | | |
| ML (1+4) à 100° C | 30 | 32 | 36 | 30 |

| Propriétés à l'état non vulcanisé | | | | |
|---|---|---|---|---|
| ML (1+4) à 100° C | 50 | 84 | 62 | 33 |

| Propriétés à l'état vulcanisé | | | | |
|---|---|---|---|---|
| Shore | 62,8 | 58,7 | 59,2 | 70,6 |
| MA 10 | 4,68 | 3,63 | 3,95 | 7,16 |
| MA 100 | 1,77 | 1,75 | 1,59 | 2,50 |
| MA 300 | 2,15 | 2,47 | 2,14 | 2,63 |
| MA 300 / MA 100 | 1,21 | 1,41 | 1,35 | 1,05 |
| Pertes PH (60° C, déf 35 %) | 30,6 | 19,2 | 26,4 | 30,7 |

| Propriétés dynamiques en fonction de la déformation | | | | |
|---|---|---|---|---|
| Delta G*23°C | 2,51 | 0,97 | 1,53 | 6,00 |
| tan ₘₐₓ23°C | 0,302 | 0,210 | 0,255 | 0,377 |

On en déduit qu'en mélange silice, concernant les propriétés à l'état vulcanisé, le SBR C selon l'invention et le SBR B confèrent aux compositions correspondantes B et C des propriétés de renforcement qui sont supérieures à celles obtenues avec le SBR témoin A et le SBR F comprenant le coupage précité. On notera en particulier que ce SBR F procure un renforcement réduit pour la composition correspondante F.

De plus, on notera que les propriétés hystérétiques à faibles et fortes déformations de la composition B et de la composition C selon l'invention sont améliorées par rapport à celles de la composition témoin A et de la composition F. L'hystérèse de cette dernière apparaît en effet particulièrement élevée.

En d'autres termes, il apparaît que l'incorporation à une composition de caoutchouc C dudit élastomère SBR C selon l'invention permet d'obtenir pour cette composition C des propriétés de caoutchouterie proches de celles de la composition B à élastomère fonctionnalisé classique, tout en présentant vis-à-vis de la composition A à élastomère non fonctionnalisé une facilité de mise en oeuvre analogue. On notera que l'addition directe d'un polymère PDMS dont le groupe terminal trialkylsilyl comprend un radical butyle ne permet pas d'obtenir un tel résultat.

## Revendications

1. Composition de caoutchouc vulcanisable qui est utilisable pour la fabrication d'une enveloppe de pneumatique, ladite composition comprenant une charge blanche renforçante, **caractérisée en ce qu'**elle comprend au moins un copolymère diénique à blocs qui est destiné à interagir avec ladite charge blanche renforçante et qui comprend à l'une au moins de ses extrémités de chaîne un bloc polysiloxane se terminant par un groupe trialkylsilyl, ledit bloc répondant à la formule:
[-(SiR₁R₂O)-]ₓ-SiR₃R₄R₅,
où R₁, R₂, R₃, R₄ et R₅ représentent des groupes alkyle ayant de 1 à 20 atomes de carbone et où x est un nombre entier naturel non nul.

2. Composition de caoutchouc selon la revendication 1, **caractérisée en ce que** ledit copolymère à blocs comprend des enchaînements styrène-butadiène.

3. Composition de caoutchouc selon la revendication 1 ou 2, **caractérisée en ce que** ledit ou chaque bloc polysiloxane se terminant par un groupe trialkylsilyl comprend un polydiméthylsiloxane.

4. Composition de caoutchouc selon une des revendications précédentes, **caractérisée en ce que** ledit ou chaque groupe trialkylsilyl comprend un groupe butyle.

5. Composition de caoutchouc selon une des revendications précédentes, **caractérisée en ce que** ledit ou chaque bloc polysiloxane se terminant par un groupe trialkylsilyl présente une masse moléculaire comprise entre 500 et 5000 g/mol.

6. Composition de caoutchouc selon une des revendications précédentes, **caractérisée en ce qu'**elle comprend majoritairement ladite charge blanche renforçante à titre de charge renforçante, de telle manière que la fraction massique de ladite charge blanche renforçante dans ladite charge renforçante soit supérieure à 50 %.

7. Composition de caoutchouc selon la revendication 6, **caractérisée en ce que** ladite charge renforçante comprend également du noir de carbone à titre minoritaire, de telle manière que la fraction massique dans ladite charge renforçante de ce noir de carbone soit inférieure ou égale à 30 %.

8. Composition de caoutchouc selon une des revendications précédentes, **caractérisée en ce que** ladite charge blanche renforçante est constituée de silice.

9. Composition de caoutchouc selon une des revendications précédentes, **caractérisée en ce qu'**elle comprend, en coupage avec ledit copolymère à blocs et dans une quantité allant de 1 à 70 parties en poids pour 100 parties en poids dudit copolymère à blocs, du caoutchouc naturel.

10. Composition de caoutchouc selon une des revendications 1 à 8 **caractérisée en ce qu'**elle comprend, en coupage avec ledit copolymère à blocs et dans une quantité allant de 1 à 70 parties en poids pour 100 parties en poids dudit copolymère à blocs, un élastomère synthétique et/ou un élastomère diénique couplé et/ou étoilé.

11. Procédé de préparation d'une composition de caoutchouc selon une des revendications précédentes, **caractérisé en ce qu'**il consiste,
- dans une première étape, à faire réagir un premier réactif constitué d'un polymère diénique vivant avec un second réactif constitué d'un polysiloxane comprenant, à l'une de ses extrémités de chaîne, une fonction halogéno-organosilane et, à son autre extrémité de chaîne, un groupe trialkylsilyl, pour l'obtention dudit copolymère à blocs comprenant ledit bloc polysiloxane terminé par un groupe trialkylsilyl, puis
- dans une seconde étape, à procéder au mélangeage par travail thermo-mécanique dudit copolymère à blocs avec de la silice, à titre de charge renforçante majoritaire, et avec les additifs usuels pour l'obtention d'une composition de caoutchouc vulcanisable.

12. Procédé de préparation d'une composition de caoutchouc selon la revendication 11, **caractérisé en ce que** ladite première étape consiste à greffer, sur ledit polymère diénique vivant, un autre polymère qui comprend ledit polysiloxane et qui est obtenu par voie anionique au moyen d'un initiateur comprenant un groupe alkyle à titre de carbanion, pour l'obtention d'un copolymère à blocs.

13. Procédé de préparation selon la revendication 11 ou 12, **caractérisé en ce qu'**il consiste à utiliser, à titre de premier réactif, un homopolymère obtenu par polymérisation d'un monomère à diène conjugué ayant de 4 à 12 atomes de carbone.

14. Procédé de préparation selon la revendication 11 ou 12, **caractérisé en ce qu'**il consiste à utiliser, à titre de premier réactif, un copolymère obtenu par copolymérisation d'un ou plusieurs diènes conjugués entre eux, ou avec un ou plusieurs composés vinylaromatiques ayant de 8 à 20 atomes de carbone, ledit copolymère contenant de 20 % à 99 % en poids d'unités diéniques, et de 1 à 80 % en poids d'unités vinylaromatiques.

15. Procédé de préparation selon une des revendications 11 à 14, **caractérisé en ce qu'**il consiste à préparer ledit premier réactif par voie anionique, au moyen d'un initiateur constitué d'un alkyl lithium ou d'un amidure de lithium.

16. Procédé de préparation selon une des revendications 11 à 15, **caractérisé en ce qu'**il consiste à préparer ledit second réactif, dans un premier temps, par polymérisation d'un siloxane cyclique qui est initiée par un composé organolithien puis, dans un second temps, par fonctionnalisation au moyen d'un dihalogéno-organosilane du polysiloxane ainsi obtenu.

17. Procédé de préparation selon la revendication 16, **caractérisé en ce qu'**il consiste à utiliser l'hexaméthylcyclotrisiloxane à titre de siloxane cyclique, le n-butyl lithium à titre d'initiateur et le dichlorodiméthylsilane à titre d'agent de fonctionnalisation du polysiloxane.

18. Enveloppe de pneumatique, **caractérisée en ce qu'**elle comporte une bande de roulement comprenant une composition de caoutchouc selon une des revendications 1 à 10.

## Patentansprüche

1. Vulkanisierbare Kautschukmischung, die für die Herstellung eines Luftreifens verwendbar ist, wobei die Zusammensetzung einen hellen verstärkenden Füllstoff enthält, **dadurch gekennzeichnet, dass** sie mindestens ein Dienblockcopolymer enthält, das dazu vorgesehen ist, mit dem verstärkenden hellen Füllstoff zu wechselwirken, und das an mindestens einem Kettenende einen Polysiloxanblock aufweist, der mit einer Trialkylsilylgruppe endet, wobei der Block der folgenden Formel entspricht:
[-(SiR₁R₂O)-]ₓ-SiR₃R₄R₅,
worin R₁, R₂, R₃, R₄ und R₅ Alkylgruppen mit 1 bis 20 Kohlenstoffatomen bedeuten und x eine von Null verschiedene, natürliche ganze Zahl ist.

2. Kautschukmischung nach Anspruch 1, **dadurch gekennzeichnet, dass** das Blockcopolymer Styrol-Butadien-Verknüpfungen aufweist.

3. Kautschukmischung nach Anspruch 1 oder 2, **dadurch gekennzeichnet, dass** der Polysiloxanblock oder jeder Polysiloxanblock mit endständiger Trialkylsilylgruppe ein Polydimethylsiloxan umfasst.

4. Kautschukmischung nach einem der vorhergehenden Ansprüche, **dadurch gekennzeichnet, dass** die Trialkylsilylgruppe oder jede Trialkylsilylgruppe eine Butylgruppe umfasst.

5. Kautschukmischung nach einem der vorhergehenden Ansprüche, **dadurch gekennzeichnet, dass** der Polysiloxanblock oder jeder Polysiloxanblock, der mit einer Trialkylsilylgruppe endet, eine Molmasse von 500 bis 5000 g/mol aufweist.

6. Kautschukmischung nach einem der vorhergehenden Ansprüche, **dadurch gekennzeichnet, dass** sie als verstärkenden Füllstoff hauptsächlich den verstärkenden hellen Füllstoff in einer solchen Menge enthält, dass der Masseanteil des hellen verstärkenden Füllstoffs in dem verstärkenden Füllstoff über 50 % liegt.

7. Kautschukmischung nach Anspruch 6, **dadurch gekennzeichnet, dass** der verstärkende Füllstoff in einer kleineren Menge auch Ruß enthält, wobei die Menge so ist, dass der Masseanteil des Rußes in dem verstärkenden Füllstoff höchstens 30 % beträgt.

8. Kautschukmischung nach einem der vorhergehenden Ansprüche, **dadurch gekennzeichnet, dass** der helle verstärkende Füllstoff aus Kieselsäure besteht.

9. Kautschukmischung nach einem der vorhergehenden Ansprüche, **dadurch gekennzeichnet, dass** sie im Verschnitt mit dem Blockcopolymer in einer Menge von 1 bis 70 Gewichtsteilen auf 100 Gewichtsteile des Blockcopolymers Naturkautschuk enthält.

10. Kautschukmischung nach einem der Ansprüche 1 bis 8, **dadurch gekennzeichnet, dass** sie im Verschnitt mit dem Blockcopolymer in einer Menge von 1 bis 70 Gewichtsteilen auf 100 Gewichtsteile des Blockcopolymers ein synthetisches Elastomer und/oder ein Dienelastomer, das gekuppelt und/oder sternförmig verzweigt ist, enthält.

11. Verfahren zur Herstellung einer Kautschukmischung nach einem der vorhergehenden Ansprüche, **dadurch gekennzeichnet**, das es darin besteht,
- in einem ersten Schritt einen ersten Reaktanten, der aus einem lebenden Dienpolymer besteht, mit einem zweiten Reaktanten umzusetzen, der aus einem Polysiloxan besteht, das an einem Kettenende eine Halogeno-organosilanfunktion aufweist und an seinem anderen Kettenende eine Trialkylsilylgruppe besitzt, um das Blockcopolymer zu erhalten, das den Polysiloxanblock aufweist, der durch eine Trialkylsilylgruppe abgeschlossen wird, worauf
- in einem zweiten Schritt in einer thermo-mechanischen Verarbeitung das Blockcopolymer mit Kieselsäure als hauptsächlichem verstärkenden Füllstoff und mit Zusatzstoffen vermischt wird, die für die Herstellung einer vulkanisierten Kautschukmischung üblich sind.

12. Verfahren zur Herstellung einer Kautschukmischung nach Anspruch 11, **dadurch gekennzeichnet, dass** der erste Schritt darin besteht, auf das lebende Dienpolymer ein anderes Polymer zu pfropfen, das das Polysiloxan enthält und das auf anionischem Wege mit einem Initiator hergestellt wird, der als Carbanion eine Alkylgruppe aufweist, um ein Blockcopolymer herzustellen.

13. Verfahren zur Herstellung nach Anspruch 11 oder 12, **dadurch gekennzeichnet, dass** es darin besteht, als ersten Reaktanten ein Homopolymer zu verwenden, das durch Polymerisation eines konjugierten Dienmonomers mit 4 bis 12 Kohlenstoffatomen erhalten wird.

14. Verfahren zur Herstellung nach Anspruch 11 oder 12, **dadurch gekennzeichnet, dass** es darin besteht, als ersten Reaktanten ein Copolymer zu verwenden, das durch Copolymerisation eines oder mehrerer konjugierter Diene miteinander oder mit einer oder mehreren vinylaromatischen Verbindungen mit 8 bis 20 Kohlenstoffatomen hergestellt wird, wobei das Copolymer 20 bis 99 Gew.-% Dieneinheiten und 1 bis 80 Gew.-% vinylaromatische Einheiten aufweist.

15. Verfahren zur Herstellung nach einem der Ansprüche 11 bis 14, **dadurch gekennzeichnet, dass** es darin besteht, den ersten Reaktanten auf anionischem Wege unter Verwendung eines Initiators herzustellen, bei dem es sich um eine Alkyllithium-Verbindung oder ein Lithiumamid handelt.

16. Verfahren zur Herstellung einer Kautschukmischung nach einem der Ansprüche 11 bis 15, **dadurch gekennzeichnet, dass** es darin besteht, den zweiten Reaktanten in einem ersten Schritt durch Polymerisation eines cyclischen Siloxan, die durch eine Lithiumorganische Verbindung initiiert wird, und dann in einem zweiten Schritt durch Funktionalisierung des so erhaltenen Polysiloxan mit einem Dihalogeno-organosilan herzustellen.

17. Verfahren zur Herstellung nach Anspruch 16, **dadurch gekennzeichnet, dass** es darin besteht, als cyclisches Siloxan Hexamethylcyclotrisiloxan, als Initiator *n*-Butyllithium und als Funktionalisierungsmittel für das Polysiloxan Dichlordimethylsilan zu verwenden.

18. Luftreifen, **dadurch gekennzeichnet, dass** er einen Laufstreifen umfasst, der eine Kautschukmischung nach einem der Ansprüche 1 bis 10 enthält.

## Claims

1. A vulcanisable rubber composition which can be used for the manufacture of a tyre, said composition comprising a reinforcing white filler, **characterised in that** it comprises at least one diene block copolymer which is intended to interact with said reinforcing white filler and which comprises at at least one of its chain ends a polysiloxane block which ends in a trialkylsilyl group, said bloc corresponding to the formula:
[-(SiR₁R₂O)-]ₓ-SiR₃R₄R₅,
in which R₁, R₂, R₃, R₄ and R₅ represent alkyl groups having from 1 to 20 carbon atoms, and in which x is a natural integer other than zero.

2. A rubber composition according to claim 1, **characterised in that** said block copolymer comprises styrene-butadiene units.

3. A rubber composition according to claim 1 or 2, **characterised in that** said or each polysiloxane block which ends in a trialkylsilyl group comprises a polydimethylsiloxane.

4. A rubber composition according to one of the preceding claims, **characterised in that** said or each trialkylsilyl group comprises a butyl group.

5. A rubber composition according to one of the preceding claims, **characterised in that** said or each polysiloxane block which ends in a trialkylsilyl group has a molecular weight of between 500 and 5,000 g/mol.

6. A rubber composition according to one of the preceding claims, **characterised in that** it comprises a majority proportion of said reinforcing white filler as reinforcing filler, such that the mass fraction of said reinforcing white filler in said reinforcing filler is greater than 50%.

7. A rubber composition according to Claim 6, **characterised in that** said reinforcing filler also comprises carbon black in a minority proportion, such that the mass fraction of this carbon black in said reinforcing filler is less than or equal to 30%.

8. A rubber composition according to one of the preceding claims, **characterised in that** said reinforcing white filler is formed of silica.

9. A rubber composition according to one of the preceding claims, **characterised in that** it comprises, in a blend with said block copolymer and, in a quantity from 1 to 70 parts by weight per 100 parts by weight of said block copolymer, natural rubber.

10. A rubber composition according to one of claims 1 to 8, **characterised in that** it comprises, in a blend with said block copolymer and in a quantity from 1 to 70 parts by weight per 100 parts by weight of said block copolymer, a synthetic elastomer and/or a coupled and/or starred diene elastomer.

11. A process for the preparation of a rubber composition according to one of the preceding claims, **characterised in that** it consists,
- in a first step, of reacting a first reagent formed of a living diene polymer with a second reagent formed of a polysiloxane comprising at one of its chain ends a halo-organosilane function and, at its other chain end, a trialkylsilyl group, for obtaining said block copolymer comprising said polysiloxane block which ends in a trialkylsilyl group, then
- in a second stage, of mixing, by thermomechanical working, said block copolymer with silica, as majority reinforcing filler, and with the conventional additives for obtaining a vulcanisable rubber composition.

12. A process for the preparation of a rubber composition according to claim 11, **characterised in that** said first stage consists in grafting on said living diene polymer another polymer which comprises said polysiloxane and which is obtained anionically by means of an initiator comprising an alkyl group as carbanion, for obtaining a block copolymer.

13. A preparation process according to Claim 11 or 12, **characterised in that** it consists in using, as the first reagent, a homopolymer obtained by polymerisation of a conjugated diene monomer having 4 to 12 carbon atoms.

14. A preparation process according to claim 11 or 12, **characterised in that** it consists in using, as the first reagent, a copolymer obtained by copolymerisation of one or more dienes which are conjugated together, or with one or more vinyl aromatic compounds having 8 to 20 carbon atoms, said copolymer containing 20% to 99% by weight of diene units, and 1 to 80% by weight of vinyl aromatic units.

15. A preparation process according to one of claims 11 to 14, **characterised in that** it consists in preparing said first reagent anionically, by means of an initiator formed of an alkyllithium or a lithium amide.

16. A preparation process according to one of claims 11 to 15, **characterised in that** it consists in preparing said second reagent, firstly, by polymerisation of a cyclic siloxane which is initiated by an organolithium compound, then, secondly, by functionalisation by means of a dihalo-organosilane of the polysiloxane thus obtained.

17. A preparation process according to Claim 16, **characterised in that** it consists in using hexamethylcyclotrisiloxane as the cyclic siloxane, n-butyllithium as initiator and dichlorodimethylsilane as the functionalising agent for the polysiloxane.

18. A tyre, **characterised in that** it comprises a tread containing a rubber composition according to one of Claims 1 to 10.
